Europäisches Patentamt

European Patent Office

Office européen des brevets

(11) Publication number: **0 087 249**

**B1**

(12) **EUROPEAN PATENT SPECIFICATION**

(45) Date of publication of patent specification: **30.09.87**

(21) Application number: **83300703.2**

(22) Date of filing: **11.02.83**

(51) Int. Cl.⁴: **H 04 N 9/83, H 04 N 9/88**

(54) **Apparatus for reproducing video and audio signals.**

(30) Priority: **13.02.82 JP 21695/82**

(43) Date of publication of application:
**31.08.83 Bulletin 83/35**

(45) Publication of the grant of the patent:
**30.09.87 Bulletin 87/40**

(84) Designated Contracting States:
**AT DE FR GB NL**

(73) Proprietor: **SONY CORPORATION**
**7-35 Kitashinagawa 6-Chome Shinagawa-ku**
**Tokyo 141 (JP)**

(72) Inventor: **Hagita, Shoji c/o Patent Division**
**Sony Corporation 7-35 Kitashinagawa-6**
**Shinagawa-ku Tokyo (JP)**
Inventor: **Kakuyama, Shinji c/o Patent Division**
**Sony Corporation 7-35 Kitashinagawa-6**
**Shinagawa-ku Tokyo (JP)**

(74) Representative: **Thomas, Christopher Hugo**
**et al**
**D Young & Co 10 Staple Inn**
**London WC1V 7RD (GB)**

(56) References cited:
**EP-A-0 044 687**
**DE-A-2 201 691**
**DE-B-1 277 900**
**US-A-3 989 893**
**US-A-4 245 262**

**PHILIPS TECHNICAL REVIEW, vol. 33, no. 7,**
**1973, pages 181-185, Eindhoven, NL, W. VAN**
**DEN BUSSCHE et al.: "Signal processing in the**
**Philips "VLP" system"**

Courier Press, Leamington Spa, England.

# Description

This invention relates to apparatus for reproducing video and audio signals, such as may constitute a television signal, that have been recorded on a magnetic medium.

In video tape recorders, when recording a colour television signal on a magnetic tape, the chrominance and luminance signal components that constitute the colour video signal are usually separated, and the carrier frequency of the chrominance signal component is converted to a low value relative to the higher carrier frequency that the luminance component frequency modulates. The frequency-converted chrominance signal component and the high side band of the frequency-modulated luminance signal component are then mixed or combined to form a composite colour video signal that is recorded on a magnetic tape in successive, parallel record tracks extending obliquely with respect to the longitudinal or running direction of the tape. In such a system for recording a colour television signal, the audio signal is recorded on the tape in separate record tracks that extend in the longitudinal direction of the tape.

In such a recording system, the oblique tracks in which the composite colour video signal made up of the frequency-converted chrominance signal component and the frequency-modulated luminance signal component are recorded, are formed by first and second substantially diametrically opposed rotary magnetic heads both supplied with the composite colour video signal. The heads alternately scan the tape along a path at an angle to the longitudinal direction in which the tape is transported. In order to increase the recording density of the colour video signal on the tape, and thereby increase the duration of the recording, it has been known to restrict the speed at which the tape is transported so that successive oblique tracks scanned by the heads will be more closely spaced or be immediately adjacent to each other, that is, so that the spaces or so-called guard bands between the adjacent tracks will be eliminated. Nevertheless, in such a case, the problem of "cross-talk" arises in the reproduction mode. In other words, during reproduction of these closely arranged tracks, a transducer or head scanning one of the oblique tracks for reproducing the composite colour video signal recorded therein will also reproduce signals from the next adjacent tracks, such signals being known as cross-talk.

This problem of cross-talk has been substantially solved, at least in respect of the relatively high frequency frequency-modulated luminance signal component of the recorded composite colour video signal, by providing the first and second rotary magnetic heads with different azimuth angles, so that the composite colour video signal will be recorded in each oblique track by a head having an azimuth angle different from the azimuth angle of the head with which the composite colour video signal is recorded in the next adjacent track. Subsequently, during reproduction, each oblique track is scanned by the rotary magnetic head having the corresponding azimuth angle, with the result that a substantial and beneficial azimuth loss is experienced in the relatively high frequency components of the cross-talk derived from the adjacent tracks. Thus, the cross-talk in the frequency-modulated luminance signal component is substantially suppressed.

Nevertheless, the azimuth loss effect is more serious with respect to the low frequency band of the cross-talk, that is, with respect to the frequency-converted chrominance signal component, so that other measures need be taken to reduce or eliminate the low-frequency component of the cross-talk. As disclosed in detail in our U.S. Patent No. 4,007,482, cross-talk in the frequency-converted chrominance signal situated in a relatively low-frequency band is substantially eliminated by recording the chrominance signal component with different first and second carriers in the adjacent tracks, respectively. These first and second carriers, which have been modulated by the chrominance signal component and recorded in adjacent tracks, may be distinguished from each other by their respective frequency and/or polarity characteristics so that, upon reproduction of the signal recorded in a particular track, the low frequency component of the cross-talk from the tracks next to it can be suppressed or eliminated by reason of the different frequency, and/or polarity, or phase characteristics of the respective carriers.

More specifically, as disclosed in the above U.S. patent, the chrominance signal component of the colour video signal to be recorded may be frequency-converted so as selectively to produce first and second frequency converted signals which, when considered instantaneously, have the same carrier frequency but which differ from each other in their phase or polarity characteristics. In this case, each of the line areas of one track may have recorded therein a frequency-converted chrominance signal component with a carrier of constant polarity, while in the next adjacent tracks the carrier of the frequency-converted chrominance signal component recorded therein reverses its polarity for successive line intervals. Such a pattern of recording ensures that during reproduction cross-talk effects can be minimized or eliminated.

When high density recording of the colour video signal in successive oblique tracks on the tape is effected as described above, the rotational speed of the rotary magnetic heads is relied upon to provide the desired relatively high speed with respect to the magnetic tape for ensuring high quality recording of the colour video signal in the oblique tracks. Nevertheless, in achieving the high density recording of the colour video signal the transport speed of the tape is necessarily quite low, thus, the relative velocity between the tape and the fixed heads, which record the audio signals in the respective audio tracks, is also quite low, with the result that the quality of the audio recording is adversely affected.

It has been proposed that the audio signals be frequency modulated and then mixed with the composite colour video signal to provide a mixed or combined signal supplied to the rotary magnetic heads for recording the combined signal in the oblique tracks. It has also been proposed that the video and audio signal recording apparatus comprise frequency modulating means for modulating first and second carriers by a first audio signal to be recorded, for example, by a stereophonic left signal, thereby providing first and second frequency-modulated audio signals, respectively, and for modulating third and fourth frequency-modulated audio signals, respectively. These first, second, third and fourth carriers would all have different frequencies. The proposed apparatus also includes a first mixing means for mixing, with the video signal, two of the frequency-modulated audio signals that represent the first and second audio signals to be recorded, respectively, and thereby providing a first mixed audio and video signal, and also second mixing means for mixing the other two of the frequency-modulated audio signals with the video signal, thereby providing a second mixed audio and video signal. In this system the first and second magnetic heads have different azimuth angles and receive the first and second mixed audio and video signals, respectively, for recording the first and second mixed signals in respective record tracks that are adjacent to each other on the magnetic tape.

The respective frequencies of the first, second, third and fourth carriers of the frequency-modulated audio signals, as described above, can have successively increasing values, wherein the first frequency-modulated audio signals mixed with the video signal in the first mixing means for providing the first mixed audio and video signal are the first and third frequency-modulated audio signals, and the other two frequency-modulated audio signals mixed with the video signal to provide the second mixed audio and video signal are the second and fourth frequency-modulated audio signals.

When reproducing video and audio signals recorded as first and second mixed signals, as described above, with different azimuth angles in adjacent parallel tracks on a magnetic record medium, the adjacent tracks are scanned by first and second magnetic heads having corresponding azimuth angles so as alternately to reproduce the first and second mixed signals. The reproduced signals are then separated into the respective frequency-modulated audio signals from the reproduced first and second mixed signals, and the frequency-modulated audio signals that have been separated from the first and second mixed signals are frequency demodulated, thereby to obtain respective alternately reproduced demodulated portions of the first and second audio signals. These alternately reproduced signals are then sequentially combined to provide substantially continuous demodulated first and second audio signals.

Thus, it is known to have high density recording of mixed audio and video signals in a fashion such that adverse effects of cross-talk between adjacent tracks are substantially eliminated. Nevertheless, the ability to accomplish high-density recording without deleterious cross-talk accentuates another problem that was present all along but was overshadowed by the cross-talk problem, that is, the problem of drop-outs. These drop-outs occur at random and involve an absence of signal at a particular instant during reproduction, typically due to mistracking caused by tape/head misalignment or by a stretched magnetic tape, or by particles of dirt or other foreign material on the head or on the magnetic tape. These causes lead to the randomness of the drop-outs. Drop-outs adversely affect the audio signal as well as the video signal, and cause a brief absence of sound in the audio signal and a white line in the visual display. The ever increasing ability to raise the information density on the magnetic tape has made the random drop-out problem all the more important and one that requires a realistic and practical solution.

European patent specification EP—A1— 0 044 687 relates to a magnetic recording and reproducing apparatus in which a frequency-modulated video signal and a frequency-modulated audio signal are frequency-multiplexed, and the frequency-multiplexed signal is recorded on video tracks of a magnetic tape. When the recorded signal is reproduced, a noise produced in the audio signal due to video track switching is eliminated by holding the audio signal for the period of noise duration. An apparatus is disclosed for reproducing video and audio signals recorded as first and second mixed signals in adjacent first and second parallel tracks, respectively, on a magnetic record medium, and in which the first and second mixed signals comprise respective carriers of different frequencies frequency-modulated by at least one audio signal to form respective frequency-modulated audio signals mixed with a video signal. The apparatus comprises first and second magnetic heads for scanning the adjacent first and second tracks to reproduce alternately the first and second mixed signals therefrom, means for separating the frequency-modulated audio signals from the reproduced mixed signals, frequency-modulated audio signals separated from the first and second mixed signals and demodulated therefrom forming alternately reproduced portions of the at least one audio signal, and combining means for sequentially combining at least one audio signal and thereby providing a reconsituted, substantially continuous, demodulated audio signal. The noise elimination in the audio signal during video track switching is achieved by a previous valve holding circuit controlled by the video track switching signal.

Circuits for reducing the effects of drop-out are of course also known. For example, Philips Technical Review, Vol 33, No 7, 1973, pages 181 to 185 discloses an apparatus for recording video and audio signals. On reproduction, drop-out of the video signal is corrected by repeating the signal from the previous picture line. The audio signal is passed through a sample and hold circuit to counteract spikes in the signal level at a drop-out.

According to the present invention there is provided an apparatus for reproducing an audio signal and a video signal including luminance and chrominance components recorded as first and second mixed signals in adjacent first and second parallel tracks, respectively, on a magnetic record medium, and in which said first and second mixed signals comprise a carrier frequency-modulated by an audio signal to form a frequency-modulated audio signal mixed with a video signal, the apparatus comprising:

first and second magnetic head means for scanning said adjacent first and second tracks to reproduce alternately said first and second mixed signals therefrom;

first filter means for separating said frequency-modulated audio signal from said reproduced mixed signals;

frequency-demodulating means for receiving said frequency-modulated audio signal separated from said reproduced mixed signals and demodulating therefrom respective alternately reproduced portions of said audio signal; and

first combining means for sequentially combining said alternately reproduced portions of said audio signal and thereby produce a reconstituted, substantially continuous, demodulated audio signal;

characterised by:

first drop-out compensating means for compensating drop-out in said demodulated audio signal;

second combining means for sequentially combining said reproduced first and second mixed signal, thereby providing a combined, reproduced, substantially continuous mixed video and audio signal;

second filter means for separating said video signal from said mixed video and audio signal;

third filter means for separating said luminance and chrominance components from each other;

second drop-out compensating means for compensating drop-outs in said luminance component of the separated video signal; and

drop-out detecting means for detecting drop-outs in said first and second mixed signals reproduced by said first and second magnetic head means, said drop-out detecting means being connected to both said first drop-out compensating means and said second drop-out compensating means, whereby a detection output of said drop-out detecting means is supplied in common for compensating the drop-outs in said demodulated audio signal and for compensating the drop-outs in said luminance component of the separated video signal.

The invention will now be described by way of example with reference to the accompanying drawings, throughout which like parts are referred to by like references, and in which:

· Figure 1 is a block diagram illustrating a video and audio signal recording apparatus for recording signals on a record medium;

Figure 2 is a diagram showing the frequency spectrum of frequency-modulated audio signals, as might be produced by the apparatus of Figure 1, together with the chrominance and luminance components of a video signal, to which reference will be made in explaining various operations of the apparatus of Figure 1;

Figure 3 contains upper and lower diagrams, showing the frequency spectra of mixed signals that are recorded in parallel adjacent tracks, respectively, by the apparatus of Figure 1;

Figure 4 is a diagrammatic view of a section of magnetic tape illustrating the record tracks thereon, in which mixed video and audio signals are recorded by the apparatus of Figure 1;

Figure 5 is a block diagram of an embodiment of video and audio signal reproducing apparatus according to the invention;

Figure 6 is a schematic view of a drop-out compensator for use in an audio signal path, as might be used in the embodiment of Figure 5;

Figure 7 is a waveform diagram to which reference will be made in explaining the operation of the apparatus of Figure 5;

Figure 8 is a block diagram of a drop-out compensator, as might be used in a video path in the embodiment of Figure 5; and

Figure 9 is a block diagram of another embodiment of video and audio signal reproducing apparatus according to the invention.

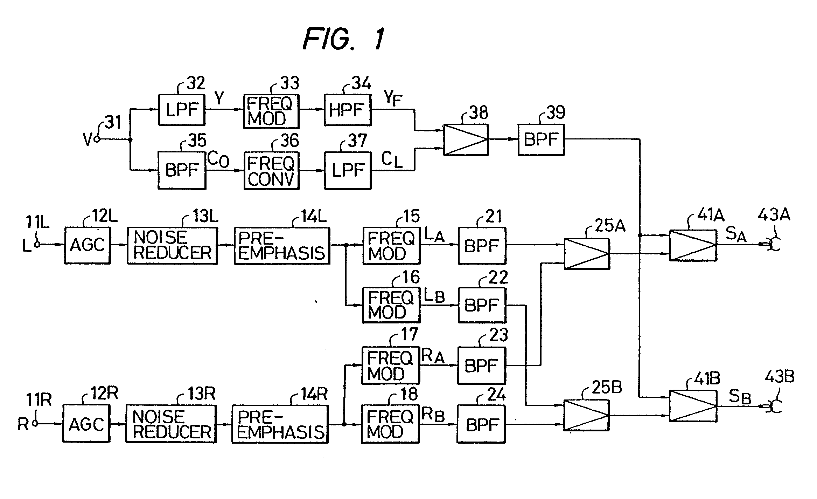

Referring to Figure 1, a video and audio signal recording apparatus has audio signal input terminals 11L and 11R to which are supplied first and second audio signals, for example, a left channel signal L and a right channel signal R of a stereophonic audio signal. The left channel signal L is supplied from the terminal 11L through an automatic gain control amplifier circuit 12L, a noise reduction circuit 13L, and a pre-emphasis circuit 14L, in succession, to first and second frequency modulators 15 and 16. Similarly, the right channel signal R is supplied from the terminal 11R through an automatic gain control amplifier circuit 12R, a noise reduction circuit 13R, and a pre-emphasis circuit 14R, in succession, to third and fourth frequency modulators 17 and 18.

The first frequency modulator 15 frequency modulates a carrier having a frequency $f_1$, for example, of 1.325 MHz, by the left channel signal L to provide a frequency shift or deviation of the carrier of about 100 to 150 kHz, and to provide at the output of the frequency modulator 15 a frequency-modulated (FM) left channel signal or first FM audio signal $L_A$. The second frequency modulator 16 similarly frequency-modulates, by means of the left channel signal L, a carrier having a frequency $f_2$, for example, of 1.475 MHz, which is higher than the frequency $f_1$ so as to provide at the output of the frequency modulator 16 another FM left channel signal, or second FM audio signal

$L_B$, having the same frequency-shift deviation as the first FM audio signal $L_A$, that is, a frequency deviation of about 100 to 150 kHz, but about a different central frequency. The third and fourth frequency modulators 17 and 18 employ the right channel signal R to frequency modulate a carrier having a frequency $f_3$, for example, of 1.625 MHz, higher than the frequency $f_2$, and a carrier having a frequency $f_4$, for example, of 1.775 MHz, higher than the frequency $f_3$. The frequency modulators 17 and 18 also provide a frequency-shift deviation of their respective carriers of about 100 to 150 kHz in response to the modulating right channel signal R, and provide at their outputs FM right channel signals $R_A$ and $R_B$, respectively hereinafter referred to as third and fourth FM audio signals, which have frequency-shift deviation bands different from each other and also different from the frequency-shift deviation bands of the first and second audio signals $L_A$ and $L_B$, respectively.

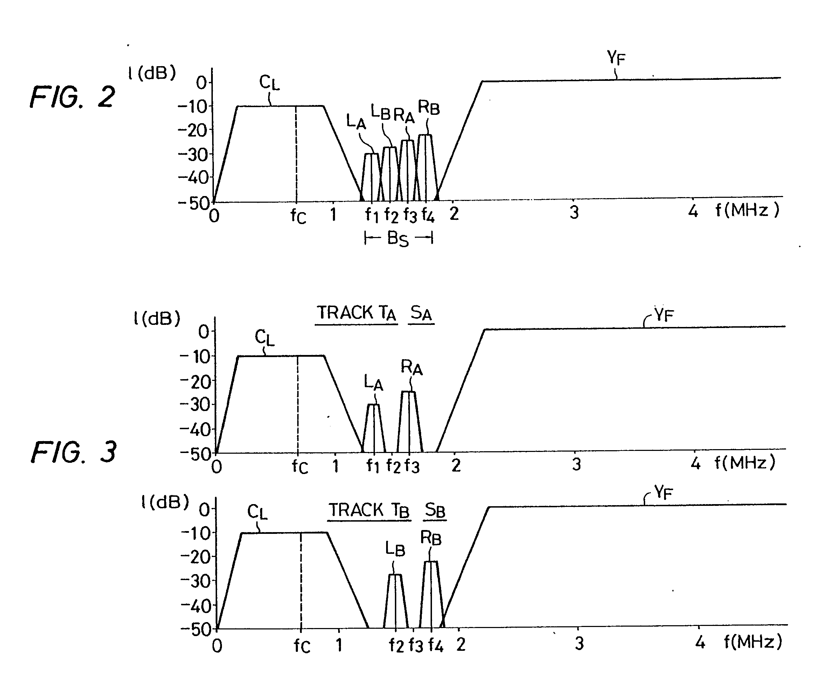

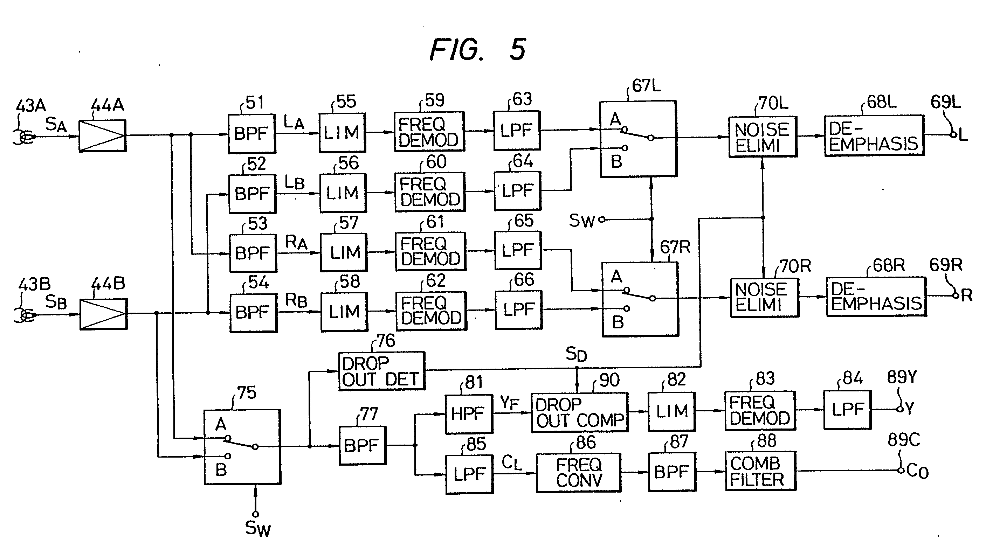

The first and second or left FM audio signals $L_A$ and $L_B$ and the third and fourth or right FM audio signals $R_A$ and $R_B$ are passed from the modulators 15, 16, 17 and 18 through corresponding band-pass filters 21, 22, 23 and 24, respectively. The levels of the FM audio signals $L_A$, $L_B$, $R_A$ and $R_B$ are suitably adjusted to have successively increased values, as shown in Figure 2, in which the abscissa represents the frequency f and the ordinate represents the levels of the FM audio signals in decibels. From Figure 2 it will be apparent that the signals $L_A$, $L_B$, $R_A$ and $R_B$ are sequentially arranged with the same difference or interval between their respective central frequencies and with the respective frequency shift bands or deviation ranges of the adjacent FM audio signals being very close to each other or even slightly overlapping, so that the entire frequency band encompassing the FM audio signals $L_A$, $L_B$, $R_A$ and $R_B$ is relatively narrow in relation to the frequency bands of the video signal.

Referring once again to Figure 1, the left FM signal $L_A$, representing the first FM audio signal from the band-pass filter 21, and the right FM signal $R_A$, representing the third FM audio signal from the band-pass filter 23, are supplied to a mixing amplifier 25A, while the left FM signal $L_B$ from the band-pass filter 22 and the right FM signal $R_B$ from the band-pass filter 24 are supplied to a mixing amplifier 25B. The output of the mixing amplifier 25A, that is, the first FM audio signal $L_A$ combined with the third FM audio signal $R_A$, is supplied to a subsequent mixing amplifier 41A for mixing with the video signal, as will be described hereinafter. Similarly, the mixed output of the mixing amplifier 25B that is, the second FM audio signal $L_B$ combined with the fourth FM audio signal $R_B$, is supplied to a mixing amplifier 41B that also has the video signal supplied thereto. The video signals supplied to the mixing amplifiers 41A and 41B both have the FM luminance signal combined with the frequency-converted chrominance signal to form what is conventionally known as a composite colour video signal.

The composite colour video signal formed of the FM luminance signal and the frequency-converted chrominance signal may be provided by a simplified video signal processing circuit as shown in Figure 1, including an input terminal 31 that receives a colour video signal V containing both luminance and chrominance components. A low-pass filter 32 receives the colour video signal V from the terminal 31 and separates the luminance component Y from the composite signal. The luminance component is then passed through a frequency modulator 33 in which a carrier with a selected central frequency is frequency modulated by the luminance component Y to provide the FM luminance component that is then passed through a high-pass filter 34 and fed to an input of a mixing amplifier 38. The other input of the mixing-amplifier 38 is the chrominance component $C_L$ that is also derived from the composite video signal appearing at the terminal 31. Specifically, the colour video signal V supplied to the terminal 31 is fed to a band-pass filter 35 that separates the chrominance component $C_O$ from the colour video signal and passes the chrominance component through a frequency converter 36 in which the chrominance component is converted to a frequency band lower than that of the FM audio signals applied to the mixing amplifiers 41A and 41B.

The resulting frequency-converted chrominance component is supplied through a low-pass filter 37 to the other input of the mixing amplifier 38 to which is also supplied the FM luminance component $Y_F$. The output of the mixing amplifier 38 is fed through a band-pass filter 39, which acts as a "trap filter" to suppress the frequency band wherein the audio signals would lie, that is, the band-pass filter 39 passes only that part of the frequency spectrum that would contain the luminance and chrominance signal portions of the video signal. The output of the band-pass filter 39 is then fed to the mixing amplifiers 41A and 41B where it is mixed with the outputs of the mixing amplifiers 25A and 25B, respectively. The mixing amplifiers 41A and 41B serve not only as mixing amplifiers but also as recording amplifiers for the recording signals fed to magnetic heads 43A and 43B, respectively, which preferably have different azimuth angles, and, which in a recording mode of the apparatus of Figure 1, are operative to record the mixed signals output from the amplifiers 41A and 41B in parallel adjacent record tracks on a magnetic record medium.

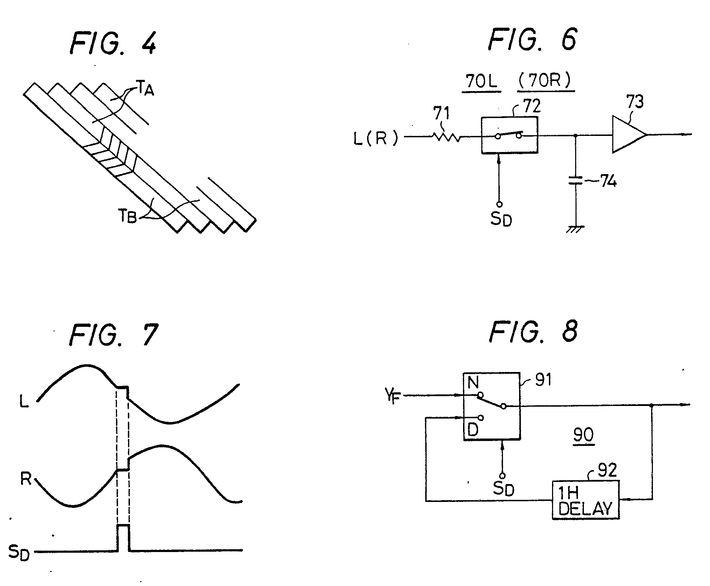

In a helical scan VTR, the magnetic record medium is in the form of a magnetic tape, which is guided in a helical path about a substantial portion of the periphery of a guide drum, and the heads 43A and 43B are diametrically opposed and rotatably mounted in relation to the guide drum for movement in a circular path coinciding with the drum periphery. In that case, during operation of the apparatus of Figure 1 in the recording mode, the heads 43A and 43B are rotated to move alternately obliquely across the tape, as the tape is suitably driven in the longitudinal direction, by rotation of the drum. In this fashion a series of oblique tracks are formed on the tape, such as those represented in Figure 4. More particularly, the head 43A scans alternate oblique tracks $T_A$ while the head 43B scans the remaining alternate tracks $T_B$. Usually, but not necessarily, each of the tracks $T_A$ and $T_B$ has recorded therein the video signal information corresponding to a respective field interval of the video signal. Since the heads 43A and 43B have air gaps arranged at substantially different azimuth angles with respect to the plane of rotation of the heads 43A and 43B, each of the heads 43A and 43B, when recording the respective mixed audio and video signals $S_A$ and $S_B$ in the respective tracks on the tape, effects magnetization of the magnetic domains in the magnetic coating of the tape in what would appear to be, if such domains were visible, a series of parallel lines extending across the respective track and having an orientation corresponding to the azimuth angle of its respective head 43A and 43B. As indicated above, in order to achieve a high information density on the tape, the tape speed is selected so that there will be no guard bands or unrecorded areas between adjacent tracks.

In order to permit the alternating tracks $T_A$ and $T_B$, as shown in Figure 4, to be distinguished from one another during reproduction, there is typically provided a control signal that is simultaneously recorded on the tape. The signal is typically derived from the vertical sync signals that are a part of the composite video signal supplied to the input terminal 31. These control signals based on the vertical sync signals are detected during reproduction and are used to identify the tracks $T_A$ and $T_B$, as to which signals were recorded by the heads 43A and 43B respectively.

Referring to Figure 2, it is seen that the frequency $f_c$ of the colour sub-carrier of the frequency-converted chrominance signal $C_L$ has a sufficiently low value, for example, 688 kHz, so that the resulting low frequency band of the chrominance signal $C_L$ will be below the band of the first FM audio signal $L_A$ having the above-mentioned central frequency $f_1$ ·of 1.325 MHz. Additionally, when the frequency-converted chrominance signal $C_L$ and the FM luminance signal $Y_F$ constituting a composite colour video signal are to be recorded along with the FM audio signals $L_A$, $L_B$, $R_A$ and $R_B$ in oblique tracks $T_A$ and $T_B$, respectively, the central frequency of the carrier to be modulated by the luminance component $Y_F$ in the frequency modulator 33 of Figure 1, is selected so that in the resulting FM luminance signal $Y_F$, the sync signal of the luminance component corresponds to a frequency which is substantially higher than the central frequency $f_4$ of the fourth audio signal $R_B$, while the maximum amplitude of the luminance component corresponds to a frequency that is higher than the frequency of the sync signal of the luminance component. In Figure 2 it will be noted from the value of the chrominance sub-carrier frequency $f_c$ and the relatively higher frequency of the FM luminance signal $Y_F$, that the resulting composite colour video signal to be recorded in the tracks $T_A$ and $T_B$, has a space or blank in its spectrum between the chrominance signal and the luminance signal sufficient to accommodate all four of the FM audio signals $L_A$, $L_B$, $R_A$ and $R_B$.

As will also be noted from Figure 2, the amplitude level of the frequency-converted chrominance signal $C_L$ is selected to be larger than the levels of all of the FM audio signals $L_A$, $L_B$, $R_A$ and $R_B$, and the amplitude level of the FM luminance signal $Y_F$ is selected to be larger than the amplitude level of the chrominance signal $C_L$. Additionally, it will be appreciated that the four FM audio signals are located close to one another in the space between the bands of the frequency-converted chrominance signal $C_L$ and the FM luminance signal $Y_F$, to minimize the space needed between the chrominance and luminance signals of the composite video signal to accommodate the four FM audio signals $L_A$, $L_B$, $R_A$ and $R_B$.

Figure 3 shows the spectrum of the signal $S_A$ as supplied to the recording head 43A. Specifically, it is seen that only the first FM audio signal $L_A$ and the third FM audio signal $R_A$ are present in the space that has been intentionally left between the chrominance signal $C_L$ and the luminance signal $Y_F$. Similarly, Figure 3 shows the signal $S_B$ produced by the amplifier 41B as supplied to the recording head 43B and including only the second FM audio signal $L_B$ and the fourth FM audio signal $R_B$ arranged in the space between the chrominance signal $C_L$ and the luminance signal $Y_F$.

The manner in which the signals recorded by the apparatus of Figure 1 are reproduced will be described with reference to Figure 5 in which a reproducing apparatus is shown to include rotary magnetic heads 43A and 43B that are operative alternately to scan the oblique tracks $T_A$ and $T_B$ formed on the magnetic tape by the apparatus of Figure 1. The movements of the heads 43A and 43B are suitably controlled by a known servo system (not shown), so that, during one field, the head 43A scans an oblique track $T_A$ and, during the next field, the other head 43B scans the adjacent oblique track $T_B$, thus, the head 43A mainly reproduces the first mixed signal $S_A$, from the scanned track $T_A$ with the frequency spectrum shown in the upper portion of Figure 3, and the second mixed signal $S_B$ having the frequency spectrum shown in the lower portion of Figure 3 is mixed therewith only as a cross-talk component from the adjacent tracks $T_B$. On the other hand, the head 43B mainly reproduces the second mixed signal $S_B$ from the track $T_B$ being scanned and having the frequency spectrum of the lower portion of Figure 3, while the first mixed signal $S_A$ is mixed therewith only as a cross-talk component from the adjacent tracks $T_B$.

The outputs from the heads 43A and 43B are supplied, respectively, through reproducing amplifiers 44A and 44B to band-pass filters 51 and 53 respectively, that pass therethrough the left FM signal $L_A$ and the right FM signal $R_A$. Although the left FM signal $L_A$ and the right FM signal $R_A$ in the output from the head 43A are reproduced from the same track $T_B$, the frequency bands of the signals $L_A$ and $R_A$ are spaced apart from each other, that is, they are not immediately adjacent, as is seen from the upper portion of Figure 3, so that the FM audio signals $L_A$ and $R_A$ can be satisfactorily separated from each other by the band-pass filters 51 and 53. Thus, the band-pass filters 51 and 53 supply the left FM signal $L_A$ and the right FM signal $R_A$, respectively, without mixing therewith any substantial cross-talk component of the other. Similarly, the output of the head 43B as obtained from the amplifier 44B is supplied to band-pass filters 52 and 54 which permit the left FM signal $L_B$ and the right FM signal $R_B$, respectively, to pass therethrough. Although the FM audio signals $L_B$ and $R_B$ in the output from the head 43B are also reproduced from the same track $T_A$, their frequency bands are spaced apart from each other, as seen in the lower portion of Figure 3, and such signals can effectively be separated from each other by the band-pass filters 52 and 54. Thus, the band-pass filters 52 and 54 provide, at their outputs, the left FM signal $L_B$ and the right FM signal $R_B$, respectively, with each such signal being substantially free of any cross-talk component from the other.

The left FM signals $L_A$ and $L_B$ and the right FM signals $R_A$ and $R_B$ obtained from the band-pass filters 51 and 53 and the band-pass filters 52 and 54, respectively, are supplied through amplitude limiters 55, 56, 57 and 58, respectively, to corresponding FM demodulators 59, 60 61 and 62. During the reproduction of the fields of the audio signal recorded in the tracks $T_A$ and $T_B$ the outputs of the frequency demodulators 59, 60, 61 and 62 are fed to low-pass filters 63, 64, 65 and 66, respectively, which each pass only the audio signal band. The purpose of the low-pass filters 63, 64, 65 and 66 is to remove from the audio signal supplied thereto any beat noises (inter-signal interference) that may occur in the outputs of the frequency demodulators 59, 60, 61 and 62 due to the existence of cross-talk components in the signals reproduced by the heads 43A and 43B.

In view of the specific selection of the differences between the adjacent carrier frequencies, for example, 150 kHz, and the specific filtering described above, portions of the reproduced left channel signal $S_A$, without any components of the right channel signal $S_B$ or any beat noises mixed therewith, are provided at the outputs of the low-pass filters 63 and 64 in alternating fields of the video signal. Similarly, portions of the reproduced right channel signal $S_B$, without any components of the left channel signal $S_A$ or any beat noise mixed therewith are provided at the outputs of the low-pass filters 65 and 66 during alternating fields of the reproduced video signal.

The alternating portions of the reproduced left channel signal obtained from the low-pass filters 63 and 64, as described above, are passed through a switch circuit 67L, which is changed over at each alternating video field period in response to a control signal $S_W$ that is applied to the tape as described hereinabove and is based upon the vertical sync signal, so that a reconstituted, continuously reproduced, left channel signal $S_A$ is obtained at the output of the switch 67L. This control signal $S_W$ is characterized as a rectangular pulse wave. Similarly, the alternating portions of the right channel signal obtained from the low-pass filters 65 and 66 in alternating fields of the video signal are passed through the switch circuit 67R under the control of the switch control signal $S_W$, so that a re-constituted continuously reproduced, right channel signal $S_B$ is obtained at the output of the switch circuit 67R. In prior systems of this kind, the combined signals are passed through de-emphasis circuits 68L and 68R, respectively, which are complementary to the pre-emphasis circuits 14L and 14R in the recording apparatus of Figure 1 and include low-pass filters (not shown). The resulting left and right channel audio output signals are then supplied to audio output terminals 69L and 69R, respectively.

In order to compensate for the adverse effects of randomly occurring drop-outs, as detected by a drop-out detector 76, one embodiment of the invention provides a drop-out compensator in each of the left and right audio channels. Specifically, a drop-out compensator (or noise eliminator) 70L is provided between the output of the signal combining switch circuit 67L and the input of the de-emphasis circuit 68L and is responsive to the output of the drop-out detector 76. A second drop-out compensator (or noise eliminator) 70R is provided in the right channel between the output of the switch circuit 67R and the input of the de-emphasis circuit 68R and is also responsive to the output signal from the drop-out detector 76. The manner in which the drop-out compensators 70L and 70R act to compensate the audio signals for the adverse effects of drop-outs will be explained in detail below.

The reproduced signals from the heads 43A and 43B and the reproducing amplifiers 44A and 44B, respectively, are combined and processed in video signal processor circuitry in keeping with the video processor of Figure 1. The two signals corresponding to the alternating tracks are combined at a switch circuit 75, which is similar in function to the switch circuits 67L and 67R described above in relation to the audio signals. The switch circuit 75 is controlled by the signal $S_W$, derived from the vertical sync signal, for example, and the composite video signal that is combined by the switch circuit 75 is available for video signal processing. Prior to signal processing, however, the drop-out detector 76 is connected to the composite video signal. The drop-out detector 76 may be any one of the several known kinds of detector, and in one embodiment of the invention the drop-out detector 76 is one in which the composite video signal is compared with a known reference level signal to detect drop-outs that are manifested by a loss of signal. The reference signal level can be varied to control the sensitivity of the drop-out detector 76. The output from the drop-out detector 76 is then fed to the drop-out compensators 70L and 70R that, upon receiving the drop-out detection signal, substantially eliminate any adverse effects caused by the detected drop-out in the left and right channels of the audio signals. The drop-out compensators 70L and 70R can operate to maintain a preceding signal level for the period of time that a drop-out is detected. This will render the effects of the drop-out substantially undetectable to the ear of the listener in all but the most extreme cases.

One example of a drop-out compensator 70L or 70R in Figure 5, suitable for use in the audio channels is shown in Figure 6. The audio signals as combined by the switch circuits 67L or 67R are fed through a resistor 71, and through a normally closed switch 72, to the input of a buffer amplifier 73. A holding capacitor 74 is connected between the audio input signal to the buffer amplifier 73 and ground. The charge on the capacitor 74 will track the audio signal levels as presented to the input of the buffer amplifier 73. When a drop-out is detected by the drop-out detector 76, a drop-out compensator control signal $S_D$ is produced and fed to the drop-out compensators 70L and 70R, and, in this embodiment, the compensator control signal $S_D$ causes the normally closed switch 72 to open. When the switch 72 is opened, the audio signal fed to the buffer amplifier 73 is interrupted and the only input to the buffer amplifier 73 is derived from the voltage stored in the capacitor 74 at that specific instant. The capacitor 74 discharges into the input of the buffer amplifier 73 and, as will be shown below in relation to Figure 7, maintains the preceding instantaneous signal level substantially constant.

The operation of the drop-out compensators 70L and 70R is shown by the waveforms in Figure 7. Specifically, the upper waveform L represents the audio signal out of the drop-out compensator 70L, and the middle waveform R represents the audio signal out of the drop-out compensator 70R. The lowermost waveform $S_D$ in Figure 7 represents the compensation control signal from the drop-out detector 76. The effects of the capacitor 74 in maintaining an instantaneous signal level substantially constant are readily seen in the upper two waveforms of Figure 7. Additionally, as may be seen in Figure 7, the length of time that a drop-out exists is small in comparison to the period of the audio signals and, thus, by smoothing the audio signals and avoiding discontinuities, the adverse effects of drop-out in the audio signals are substantially eliminated.

Returning to Figure 5, the combined first and second mixed signals appearing at the output of the switch circuit 75 contain all of the video signal information that was previously recorded on the tape, as described above with reference to Figure 1. The video signal information is first separated from the combined first and second mixed signals by a band-pass filter 77 that has a frequency response similar to a trap filter to remove all audio frequency components from the combined first and second mixed signals. The video signal must then be separated into the luminance and chrominance components, the luminance component is separated from the combined video signals by a high-pass filter 81 to produce the frequency-modulated luminance component $Y_F$. The frequency modulated luminance component $Y_F$ is then typically amplitude limited in an amplitude limiter 82 and then frequency demodulated in a frequency demodulator 83. The demodulated luminance component of the video signal is then passed through a low-pass filter 84 and made available at a terminal 89Y for display. The chrominance component is removed from the combined video signal by a low-pass filter 85 to form the chrominance component signal $C_L$. Because the chrominance component had been previously down converted in frequency, it must now be converted back up and this is accomplished in a frequency converter 86. The frequency-converted chrominance component is then filtered in a band-pass filter 87.

Additionally, as described hereinabove, the chrominance component of the video signal was recorded in a special fashion, specifically, each of the line areas or increments of one track may have recorded therein a frequency converted chrominance signal component with a carrier of constant polarity, whereas in the next adjacent tracks, the carrier of the frequency-converted chrominance signal component recorded therein reverses its polarity for successive line intervals. Such pattern of recording ensures that during reproduction cross-talk effects can be minimized or eliminated. During reproduction of the recorded signals, the reproduced signals of two successive line intervals can be added together by means of suitable delay means or by a simple comb filter 88 to cancel out or minimize cross-talk interference signals associated with the desired reproduced signals of the two successive line intervals. The combining comb filter 88 in Figure 5 produces the chrominance signal at an output terminal 89C.

Drop-outs can also adversely affect the video signal, and specifically, can adversely affect the luminance portion of the video signal, since it contains the majority of the video signal information. This embodiment of the invention therefore uses an additional drop-out compensator arranged in the chrominance component path of the video processor. A video drop-out compensator (or noise eliminator) 90 is again responsive to the compensator control signal $S_D$ that initiates drop-out compensating action in the audio drop-out compensators 70L and 70R.

The drop-out compensator 90 for use in the luminance component of the video signal is shown in more detail in Figure 8, wherein the luminance signal $Y_F$ is supplied to a normal terminal N of a switch circuit 91 that, in its normal state, provides the input luminance component $Y_F$ to its output. The switch circuit 91 is responsive to the output signal $S_D$ of the drop-out detector 76, to switch between the luminance signal $Y_F$ at a terminal N and a D terminal that has connected thereto a delayed feedback from the output of the switch circuit 91 when the normal input terminal N is connected to the output. More specifically, the chrominance signal $Y_F$ output from the switch circuit 91, when the N input is connected to the output, is fed back through a one horizontal scan line (1 H) delay unit 92 to the delay input D of the switch 91. In the operation of the video drop-out compensator 90 of Figure 8, used in the chrominance component path of the video signal, upon the drop-out detector 76 detecting a drop-out and providing a control signal $S_D$ that is fed to the switch circuit 91, the switch circuit 91 moves off its normal position at the terminal N, wherein the modulated luminance component $Y_F$ is fed through the switch circuit 91 and to the input of the amplitude limiter 82, and the switch circuit 91 moves to connect the input terminal D to its output. The feedback signal that then comprises the output signal is delayed by the one horizontal frame delay provided by the delay unit 92. The amplitude limiter 82 then receives at its input the same scan line that had been fed to it in the preceding scan, thereby eliminating adverse effects caused by a drop-out that typically results in white lines on the video screen.

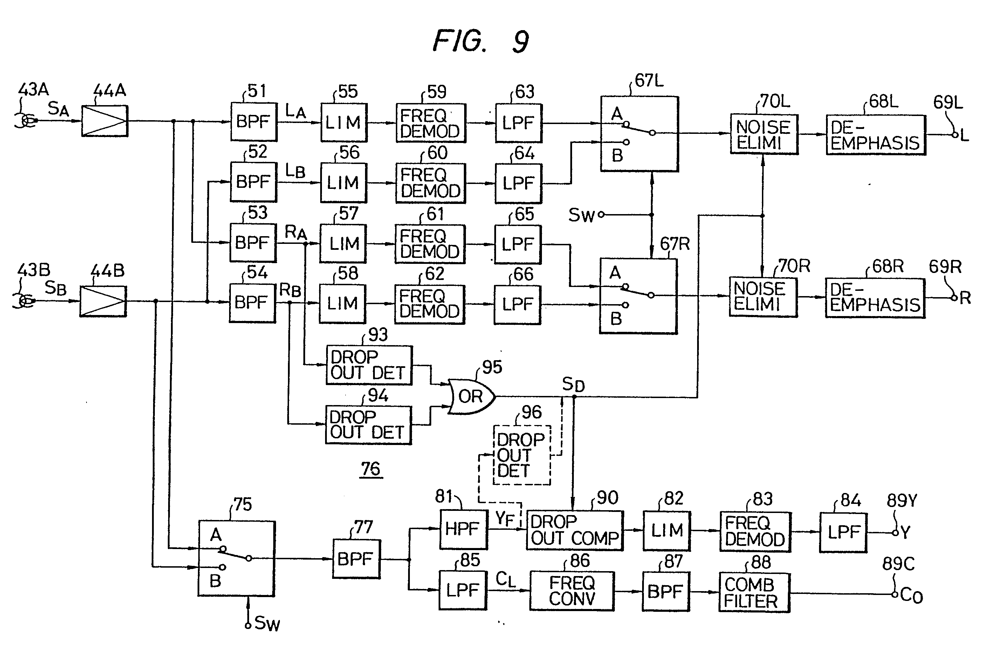

Turning now to Figure 9, another embodiment of a reproducing apparatus similar to that of Figure 5 is shown, except that the arrangement in the circuit of the drop-out detector is modified. In the embodiment of Figure 9, drop-outs are detected by the drop-out detector 76 in the frequency-modulated audio signal $R_A$ which is separated from the first mixed signal by the band-pass filter 53, and the drop-out detector 93, which can be constructed as described hereinabove is connected to this separated signal. This provides a drop-out detection of only one of the alternating tracks that have been recorded and, thus, it is neceessary to detect drop-outs in the other alternating tracks. This detection is accomplished by connecting a second drop-out detector 94 to receive the fourth frequency modulated audio signal $R_B$ as filtered out by the band-pass filter 54. The outputs from the drop-out detectors 93 and 94 are connected to the inputs of a logical OR gate 95 that produces the drop-out control signal $S_D$ which is fed to the audio drop-out compensators 70L and 70R, and the video drop-out compensator 90 located in the luminance component signal $Y_F$ path, as separated by the high-pass filter 81.

In another alternative embodiment shown in Figure 9, the drop-out detector may be located in the luminance component signal $Y_F$ line and still serve to detect all drop-outs in both of the alternating pairs of tracks. Specifically, after the first and second mixed signals produced by the heads 43A and 43B and amplified in reproducing amplifiers 44A and 44B, respectively, have been combined by the switch circuit 75, and the video portion thereof separated by the band-pass filter 77, the luminance component $Y_F$ is further separated from the video signal by the high-pass filter 81. The drop-out detector 96 is connected to the luminance signal $Y_F$ path, as shown by the dashed lines, to indicate that the drop-out detector 96 is not in addition to the other detectors but is an alternative embodiment. The output of the drop-out detector 96 then becomes the drop-out control signal $S_D$ that is supplied to the audio drop-out compensators 70L and 70R and also to the drop-out compensator 90 located in the luminance component signal $Y_F$ path.

**Claims**

1. An apparatus for reproducing an audio signal and a video signal including luminance and chrominance components recorded as first and second mixed signals in adjacent first and second parallel tracks, respectively, on a magnetic record medium, and in which said first and second mixed signals comprise a carrier frequency-modulated by an audio signal to form a frequency-modulated audio signal mixed with a video signal, the apparatus comprising:

first and second magnetic head means (43A, 43B) for scanning said adjacent first and second tracks to reproduce alternately said first and second mixed signals therefrom;

first filter means (51 to 54) for separating said frequency-modulated audio signal from said reproduced mixed signals;

frequency-demodulating means (59 to 62) for receiving said frequency-modulated audio signal separated from said reproduced mixed signals and demodulating therefrom respective alternately reproduced portions of said audio signal; and

first combining means (67L, 67R) for sequentially combining said alternately reproduced portions of said audio signal and thereby produce a reconstituted, substantially continuous, demodulated audio signal;

characterised by:

first drop-out compensating means (70L, 70R) for compensating drop-out in said demodulated audio signal;

second combining means (75) for sequentially combining said reproduced first and second mixed signal, thereby providing a combined, reproduced, substantially continuous mixed video and audio signal;

second filter means (77) for separating said video signal from said mixed video and audio signal;

third filter means (81, 85) for separating said luminance and chrominance components from each other;

second drop-out compensating means (90) for compensating drop-outs in said luminance component of the separated video signal; and

drop-out detecting means (76; 93, 94, 95) for detecting drop-outs in said first and second mixed signals reproduced by said first and second magnetic head means (43A, 43B), said drop-out detecting means (76; 93, 94, 95) being connected to both said first drop-out compensating means (70L, 70R) and said second drop-out compensating means (90), whereby a detection output of said drop-out detecting means (76; 93, 94, 95) is supplied in common for compensating the drop-outs in said demodulated audio signal and for compensating the drop-outs in said luminance component of the separated video signal.

2. Apparatus according to claim 1 further wherein said drop-out detecting means (76) receives the output of said second combining means (75) for detecting drop-outs in said combined, reproduced substantially continuous mixed video and audio signal.

3. Apparatus according to claim 1 wherein said drop-out detecting means (93, 94, 95) includes first and second drop-out detecting means (93, 94) connected for detecting drop-outs in said first and second mixed signals reproduced by said first and second magnetic head means (43A, 43B), respectively.

4. Apparatus according to claim 3 further comprising gate means (95) connected to outputs of said first and second drop-out detecting means (93, 94) for producing an output signal fed to said first and second drop-out compensating means (70L, 70R, 90) when either said first or second drop-out detecting means (93, 94) detects a drop-out.

5. Apparatus according to claim 1 wherein there are first, second, third and fourth said carriers of successively increasing frequencies, said first and second carriers being frequency-modulated by a left stereophonic audio signal to form first and second said frequency-modulated audio signals, said third and fourth carriers being frequency-modulated by a right stereophonic audio signal to form third and fourth said frequency-modulated audio signals, said first mixed signal being formed by said first and third frequency-modulated audio signals mixed with said video signal, and said second mixed signal being formed by said second and fourth frequency-modulated audio signals mixed with said video signal; wherein said frequency demodulating means (59 to 62) includes means receiving said first, second, third and fourth frequency-modulated audio signals separated from the reproduced first and second mixed signals for demodulating therefrom respective alternately reproduced portions of said left and right stereophonic audio signals; wherein said first combining means (67L, 67R) includes means (67L) to combine the alternately reproduced audio signal portion demodulated from said first and second frequency-modulated audio signals into a reconstituted left stereophonic audio signal, and means (67R) to combine the alternately reproduced audio signal portions demodulated from said third and fourth frequency-modulated audio signals into a reconstituted right stereophonic audio signal; and wherein said first drop-out compensating means (70L, 70R) includes a first drop-out compensator (70L) receiving said reconstituted left stereophonic audio signal and responsive to detection of drop-outs by said detecting means (76) for compensating therefor and a second drop-out compensator (70R) receiving said reconstituted right stereophonic audio signal and responsive to detection of drop-outs by said detecting means (76) for compensating therefor.

6. Apparatus according to claim 5 wherein said drop-out detecting means (93, 94, 95) includes a first drop-out detector (93) connected to receive one of the frequency-modulated audio signals separated from one of said reproduced signals and a second drop-out detector (94) connected to receive one of the frequency-modulated audio signals separated from the other of said reproduced mixed signals, said first and second drop-out detectors (93, 94) having outputs connected to both of said first and second drop-out compensators (70L, 70R).

7. Apparatus according to claim 1 wherein said first drop-out compensating means (70L, 70R) includes a holding circuit (74) for maintaining an instantaneous preceding signal level substantially constant during the occurrence of a drop-out detected by said drop-out detecting means (76; 93, 94, 95).

8. Apparatus according to claim 1 wherein said drop-out detecting means (76) comprises means for comparing said first and second mixed signals with a reference signal having a preselected level.

## Patentansprüche

1. Gerät zur Wiedergabe eines Audiosignals und eines Luminanz- und Chrominanzkomponenten enthaltenden Videosignals, die als erste und zweite Signalgemische in parallen, zueinander benachbarten

ersten und zweiten Spuren eines magnetischen Aufzeichnungsmediums aufgezeichnet sind, wobei das erste und das zweite Signalgemisch einen Träger enthalten, der zur Bildung eines mit einem Videosignal gemischten frequenzmodulierten Audiosignals mit einem Audiosignal frequenzmoduliert ist,

mit einer ersten und einer zweiten Magnetkopfeinrichtung (43A, 43B) zur Abtastung der einander benachbarten ersten und zweiten Spur für die abwechselnde Wiedergabe des ersten und des zweiten Signalgemischs von diesen Spuren,

mit einer ersten Filtereinrichtung (51 bis 54) zum Abtrennen des frequenzmodulierten Audiosignals aus den Wiedergabe-Signalgemischen,

mit einer Frequenzdemodulationseinrichtung (59, bis 62), die das von den Wiedergabe-Signalgemischen abgetrennte frequenzmodulierte Audiosignal aufnimmt und die betreffenden abwechselnd wiedergegebenen Abschnitte des Audiosignals demoduliert,

sowie mit einer ersten Kombinationseinrichtung (67L, 67R), die die abwechselnd wiedergegebenen Abschnitte des Audiosignals sequentiell zusammensetzt und dadurch ein im wesentlichen kontinuierliches, rekonstruiertes Audio-Demodulationssignal erzeugt,

gekennzeichnet durch

eine erste Drop-Out-Kompensationseinrichtung (70L, 70R) zur Kompensation von Drop-Outs in dem demodulierten Audiosignal,

eine zweite Kombinationseinrichtung (75), die das erste und das zweite Wiedergabe-Signalgemisch sequentiell zusammensetzt und dadurch ein zusammengesetztes, im wesentlichen kontinuierliches Video- und Audio-Wiedergabe-Signalgemisch liefert,

eine zweite Filtereinrichtung (77) zum Abtrennen des Videosignals aus dem Video- und Audio-Wiedergabe-Signalgemisch,

eine dritte Filtereinrichtung (81, 85) zum Abtrennen der Luminanz- und Chrominanzkomponenten,

eine zweite Drop-Out-Kompensationseinrichtung (90) zur Kompensation von Drop-Outs in der Luminanzkomponente des abgetrennten Videosignals

und eine Drop-Out-Detektoreinrichtung (76; 93, 94, 95) zur Erfassung von Drop-Outs in dem von der ersten und der zweiten Magnetkopfeinrichtung (43A, 43B) wiedergegebenen ersten und zweiten Signalgemisch, wobei diese Drop-Out-Detektoreinrichtung (76; 93, 94, 95) sowohl mit der ersten als auch mit der zweite Drop-Out-Kompensationseinrichtung (70L, 70R bzw. 90) derart verbunden ist, daß die Drop-Out-Detektoreinrichtung (76; 93, 94, 95) ein gemeinsames Detektorausgangssignal für die Kompensation der Drop-Outs in dem demodulierten Audiosignal und für die Kompensation der Drop-Outs in der Luminanzkomponenten des abgetrennten Videosignals liefert.

2. Gerät nach Anspruch 1, in welchem die Drop-Out-Detektoreinrichtung (76) ferner das Ausgangssignal der zweiten Kombinationseinrichtung (75) aufnimmt, um Drop-Outs in dem kombinierten, im wesentlichen kontinuierlichen Video- und Audio-Wiedergabe-Signalgemisch zu erfassen.

3. Gerät nach Anspruch 1, in welchem die Drop-Out-Detektoreinrichtung (93, 94, 95) erste und zweite Drop-Out-Detektormittel (93, 94) enthält, die derart schaltungsmäßig angeordnet sind, daß sie Drop-Outs in dem von der ersten und der zweiten Magnetkopfeinrichtung (43A, 43B) wiedergegebenen ersten bzw. zweiten Signalgemisch erfassen.

4. Gerät nach Anspruch 3 mit einem mit den Ausgängen der ersten und zweiten Drop-Out-Detektormittel (93, 94) verbundenen Gatter zur Erzeugung eines Ausgangssignals, das der ersten und der zweiten Drop-Out-Kompensationseinrichtung (70L, 70R, 90) zugeführt wird, wenn entweder die ersten oder die zweiten Drop-Out-Detektormittel (93, 94) einen Drop-Out erfassen.

5. Gerät nach Anspruch 1,

in welchem ein erster, ein zweiter, ein dritter und ein vierter Träger mit sukzessiv ansteigender Frequenz eingesetzt und der erste und der zweite Träger zur Bildung eines ersten und eines zweiten frequenzmodulierten Audiosignals mit einem linken stereophonischen Audiosignal frequenzmoduliert werden, und der dritte und der vierte Träger zur Bildung eines dritten und vierten frequenzmodulierten Audiosignals mit einem linken stereophonischen Audiosignal frequenzmoduliert werden, wobei das erste Signalgemisch von dem mit dem Videosignal gemischten ersten und dritten frequenzmodulierten Audiosignal und das zweite Signalgemisch von dem mit dem Videosignal gemischten zweiten und vierten frequenzmodulierten Audiosignal gebildet werden,

in welchem ferner die Frequenzdemodulationseinrichtung (59 bis 62) Mittel enthält, die die von dem ersten und dem zweiten Wiedergabe-Signalgemisch abgetrennten ersten, zweiten, dritten und vierten frequenzmodulierten Audiosignale aufnehmen und aus diesen abwechselnd wiedergegebene Abschnitte des linken bzw. rechten stereophonischen Audiosignals demodulieren,

in welchem die erste Kombinationseinrichtung (67L, 67R) Mittel (67L) enthält zur Kombination des aus dem ersten und zweiten frequenzmodulierten Audiosignal demodulierten und abwechselnd wiedergegebenen Audiosignalabschnitts zu einem rekonstruierten linken stereophonischen Audiosignal, sowie Mittel (67R) zur Kombination des aus dem dritten und vierten frequenzmodulierten Audiosignal demodulierten und abwechselnd wiedergegebenen Audiosignalabschnitts zu einem rekonstruierten rechten stereophonischen Audiosignal,

und in welchem die Drop-Out-Kompensationseinrichtung (70L, 70R) einen ersten Drop-Out-Kompensator (70L) enthält, der das rekonstruierte linke stereophonische Audiosignal aufnimmt, bei der Erfassung von Drop-Outs der genannten Detektoreinrichtung (76) anspricht und diese Drop-Outs kompensiert, sowie einen zweiten Drop-Out-Kompensator (70R), der das rekonstruierte rechte stereophonische Audiosignal aufnimmt, bei der Erfassung von Drop-Outs der genannten Detektoreinrichtung (76) anspricht und diese Drop-Outs kompensiert.

6. Gerät nach Anspruch 5, in welchem die Drop-Out-Detektoreinrichtung (93, 94, 95) einen ersten Drop-Out-Detektor (93) enthält, der derart schaltungsmäßi angeordnet ist, daß er eines der von einem der Wiedergabe-Signalgemische abgetrennten Audiosignale aufnimmt, sowie einen zweiten Drop-Out-Detektor (94), der derart schaltungsmäßig angeordnet ist, daß er eines der von dem anderen Wiedergabe-Signalgemisch abgetrennten Audiosignale aufnimmt, wobei der erste und der zweite Drop-Out-Detektor (93, 94) Ausgänge besitzen, die sowohl mit dem ersten als auch mit dem zweiten Drop-Out-Kompensator (70L, 70R) verbunden sind.

7. Gerät nach Anspruch 1, in welchem die erste und die zweite Drop-Out-Kompensationseinrichtung (70L, 70R) mit einer Halteschaltung (74) ausgestattet sind, die während des Auftretens eines von der Drop-Out-Detektoreinrichtung (76; 93, 94, 95) erfaßten Drop-Outs den unmittelbar vorangehenden Signalpegel im wesentlichen konstant halten.

8. Gerät nach Anspruch 1, bei dem die Drop-Out-Detektoreinrichtung (76) Mittel für das Vergleichen des ersten und des zweiten Signalgemischs mit einem Referenzsignal vorbestimmten Pegels umfassen.

## Revendications

1. Appareil de reproduction d'un signal de son et d'un signal d'image contenant des composantes de luminance et de chrominance enregistrées sous forme d'un premier et d'un second signaux mélangés dans une première et une seconde pistes parallèles voisines respectivement sur un support d'enregistrement magnétique, et dans lequel ledit premier et ledit second signaux mélangés consistent en une porteuse modulée en fréquence par un signal de son pour former un signal de son modulé en fréquence mélangé avec un signal vidéo, l'appareil comportant: une première et une seconde têtes magnétiques (43A, 43B) pour balayer ladite première et ladite seconde pistes voisines afin de reproduire alternativement ledit premier et ledit second signaux mélangés à partir de ces pistes; un premier dispositif de filtres (51 à 54) destiné à séparer ledit signal de son modulé en fréquence desdits signaux mélangés et reproduits; un dispositif de démodulation de fréquence (59 à 62) destiné à recevoir ledit signal de son modulé en fréquence séparé desdits signaux mélangés et reproduits et les démodulant en des parties reproduites alternativement respectives dudit signal de son; et un premier dispositif de combinaison (67L, 67R) destiné à combiner séquentiellement lesdites parties reproduites alternativement dudit signal de son et à produire ainsi un signal de son démodulé et reconstitué de façon pratiquement continue; caractérisé par un premier dispositif de compensation d'évanouissement (70L, 70R) destiné à compenser un évanouissement dans ledit signal de son démodulé; un second dispositif de combinaison (75) destiné à combiner séquentiellement ledit premier et ledit second signaux mélangés et reproduits de manière à produire un signal de son et un signal vidéo mélangés, combinés, reproduits de façon pratiquement continue; un second dispositif de filtres (77) destiné à séparer ledit signal vidéo dudit signal vidéo et de son mélangés; un troisième dispositif de filtre (81, 85) destiné à séparer l'une de l'autre lesdites composantes de luminance et de chrominance; un second dispositif de compensation d'évanouissement (90) destiné à compenser des évanouissement dans ladite composante de luminance du signal vidéo séparé; et un dispositif de détection d'évanouissement (76; 93, 94, 95) destiné à détecter des évanoussiements dans ledit premier et ledit second signaux mélangés, reproduits par ladite première et ladite seconde têtes magnétiques (43A, 43B), ledit dispositif de détection d'évanouissement (76; 93, 94, 95) étant connecté à la fois audit premier dispositif de compensation d'évanouissement (70L, 70R) et audit second dispositif de compensation d'évanouissement (90) de manière qu'une sortie de détection dudit dispositif de détection d'évanouissement (76; 93, 94, 95) soit appliquée en commun pour compenser les évanouissements dudit signal de son démodulé et pour compenser les évanouissements de ladite composante de luminance du signal vidéo séparé.

2. Appareil selon la revendication 1, dans lequel en outre ledit dispositif de détection d'évanouissement (76) reçoit la sortie dudit second dispositif de combinaison (75) pour détecter des évanouissements dans ledit signal de son et d'image mélangés, combinés et reproduits de façon pratiquement continue.

3. Appareil selon la revendication 1, dans lequel ledit dispositif de détection d'évanouissement (93, 94, 95) comporte un premier et un second dispositifs de détection d'évanouissement (93, 94) connectés pour détecter des évanouissements dans lesdits premier et second signaux mélangés reproduits par ladite première et ladite seconde têtes magnétiques (43A, 43B) respectivement.

4. Appareil selon la revendication 3, comportant en outre un dispositif à porte (95) connecté aux sorties desdits premier et second dispositifs de détection d'évanouissement (93, 94) pour produire un signal de sortie appliqué auxdits premier et second dispositifs de compensation d'évanouissement (70L, 70R, 90) lorsque l'un ou l'autre desdits premier et second dispositifs de détection d'évanouissement (93, 94) détecte un évanouissement.

5. Appareil selon la revendication 1, dans lequel sont présentes une première, une seconde, une troisième et une quatrième desdites porteuses de fréquences croissants successivement, lesdites première et seconde porteuses étant modulées en fréquence par un signal de son stéréophonique de gauche pour former des premier et second signaux de son modulés en fréquence, lesdites troisième et quatrième porteuses étant modulées en fréquence par un signal de son stéréophonique de droite pour former des troisième et quatrième desdits signaux de son modulés en fréquence, ledit premier signal mélangé étant formé par lesdits premier et troisième signaux de son modulés en fréquence, mélangés avec ledit signal vidéo et ledit second signal mélangé étant formé par lesdits second et quatrième signaux de son modulés en fréquence mélangés avec ledit signal vidéo; dans lequel ledit dispositif de démodulation de fréquence (59 à 62) comporte un dispositif destiné à recevoir lesdits premier, second, troisième et quatrième signaux de son modulés en fréquence, séparés du premier et du second signaux mélangés reproduits pour les démoduler en des parties reproduits alternativement desdits signaux de son stéréophoniques de gauche et de droite; dans lequel ledit premier dispositif de combinaison (67L, 67R) comporte un dispositif (67L) pour combiner la partie de signal de son reproduite alternativement, démodulée à partir desdits premier et second signaux de son modulés en fréquence en un signal de son stéréophonique de gauche reconstitué et un dispositif (67R) destiné à combiner les parties de signaux de son reproduites alternativement, démodulées à partir desdits troisième et quatrième signaux de son modulés en fréquence en un signal de son stéréophonique de droite reconstitué; et dans lequel ledit premier dispositif de compensation d'évanouissement (70L, 70R) comporte un premier compensateur d'évanouissement (70L) qui reçoit ledit signal de son stéréophonique de gauche reconstitué et qui réagit à la détection des évanouissements par ledit dispositif de détection (76) en les compensant et un second compensateur d'évanouissement (70R) qui reçoit ledit signal de son stéréophonique de droite reconstitué et réagissant à la détection des évanouissements par ledit dispositif de détection (76) en les compensant.

6. Appareil selon la revendication 5, caractérisé en ce que ledit dispositif de détection d'évanouissement (93, 94, 95) comporte un premier détecteur d'évanouissement (93) connecté pour recevoir l'un des signaux de son modulés en fréquence séparés de l'un desdits signaux reproduits et un second détecteur d'évanouissement (94) connecté pour recevoir l'un des signaux de son modulés en fréquence séparé de l'autre desdits signaux mélangés et reproduits, lesdits premier et second détecteurs d'évanouissement (93, 94) comportant des sorties connectées à la fois auxdits premier et second compensateurs d'évanouissement (70L, 70R).

7. Appareil selon la revendication 1, dans lequel ledit premier dispositif de compensation d'évanouissement (70L, 70R) comporte un circuit de maintien (74) destiné à maintenir pratiquement constant un niveau précédent du signal instantané pendant l'apparition d'un évanouissement détecté par ledit dispositif de détection d'évanouissement (76; 93, 94, 95).

8. Appareil selon la revendication 1, dans lequel ledit dispositif de détection d'évanouissement (76) comporte un dispositif qui compare lesdits premier et second signaux mélangés avec un signal de référence ayant un niveau prédéterminé.

# FIG. 1

FIG. 2

FIG. 3

0 087 249

*FIG. 5*

## FIG. 4

## FIG. 6

## FIG. 7

## FIG. 8

FIG. 9